# EUROPEAN PATENT APPLICATION

(11) **EP 1 186 567 A1**
(43) Date of publication of application: **13.03.2002**
(21) Application number: 00830606.0
(22) Date of filing: 07.09.2000
(51) Int. Cl.: B66F 11/04, B60G 17/005

(54) **Base structure for work platform**

(71) Applicant: Iteco S.p.A., 46020 Pegognaga, Mantova (IT)
(72) Inventor: Sanibondi, Elio, 42100 Reggio Emilia (IT)
(74) Representative: Gotra, Stefano

(57) **Abstract**

The truck for transporting a work platform is provided with two steering front drive wheels (2, 3) and two height-adjustable back drive wheels. The front wheels (2,3) are borne on two arms (4, 5) which oscillate about a common oscillation axis (y) parallel to a longitudinal axis (x) of the truck (1), on command of two hydraulic cylinders (9, 10). The work platform is raisable in such a way that it remains parallel to a reference plane. The truck (1) enables the work platform to be maintained level even where the underlying terrain is especially uneven. Compensation for uneven terrain is achieved by means of a coordinated adjustment of all four wheels, each of which can be displaced vertically for purposes of truck position adjustment, and each of which can be displaced independently of the others.

## Description

The invention relates particularly to a truck for carrying a work platform as defined in the introduction to the first claim hereof.

A truck of this type is already known, for example in patent EP 0 662 446. In trucks of this type, used for transporting and as a base for a raisable work platform, the work platform itself must be kept level. For this reason prior-art trucks,being destined for land transport (where there is rarely a perfectly flat horizontal surface) incur the problem of having to compensate for uneven terrain in order to keep the work platform perfectly horizontal.

This problem has been addressed. An attempt at a solution is described in EP 0 662 446, which to solve the problem enables the truck to adapt to the terrain by vertical displacement of all of the wheels. In particular, the front wheels can displace vertically thanks to the fact that they are mounted on a single axle oscillating about an axis which is parallel to the longitudinal axis of the truck. A further attempt at solving the problem is described in patent publication WP 92/04515, which also describes a truck with the front wheels mounted on a single oscillating axle.

The main aim of the present invention is to provide a truck, of the above-indicated type, which has an ability to compensate for uneven terrain which is better than any such ability in the prior art, and which is able to keep the work platform level even where the terrain is particularly uneven.

An advantage of the present invention is to provide a truck which can return from an especially difficult position which has been seen to cause blocking in other trucks of the type.

A further advantage of the invention is to provide a truck which can be easily manoeuvred on any type of terrain.

These aims and advantages and more besides are all attained by the invention as it is characterised in the appended claims.

Further characteristics and advantages of the present invention will better emerge from the detailed description that follows of a preferred but non-exclusive embodiment of the invention, illustrated purely by way of a non-limiting example in the accompanying figure of the drawing, in which:

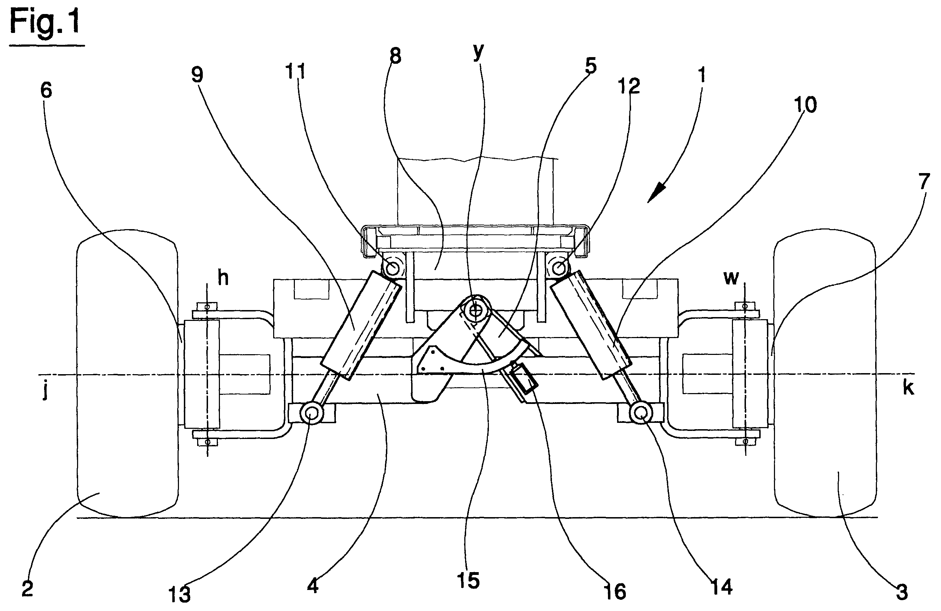

figure 1 shows a frontal view of a truck made according to the present invention;

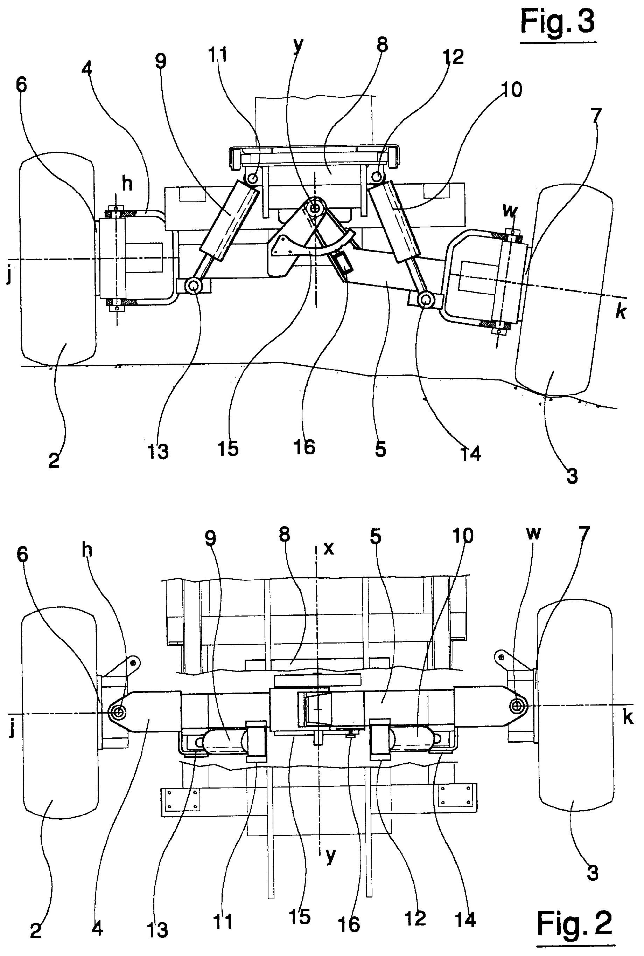

figure 2 shows a view from above of the front part of the truck of figure 1;
figure 3 shows the truck of figure 1 in a different operative configuration.

With reference to the above-mentioned figures, 1 denotes in its entirety a self-propelling lift truck for transport of a work platform. The truck 1 carries a lift apparatus for raising the work platform. The lift apparatus and the platform are both of known type and are therefore illustrated only partially or schematically. The lift apparatus maintains the work platform parallel to a reference plane. Generally this reference plane is horizontal.

The truck 1 has a longitudinal axis x which corresponds to the straight advancement direction of the truck. The truck 1 is provided with two front wheels 2 and 3, both being drive wheels and steer wheels, and two back wheels, both being drive wheels and height-adjustable wheels. The back wheels, not illustrated, are preferably mounted on suspensions whose position can be singly adjusted vertically, in known ways.

Each guiding front wheel 2 or 3 is mounted on an arm 4 or 5 which is oscillated by special controls, with separate and individual controls for each arm 4 and 5. The two arms 4 and 5 extend transversally lengthwise with respect to the longitudinal axis x of the truck.

The two arms 4 and 5 bearing the two front wheels 2 and 3 oscillate about aligned oscillation axes (denoted by y), which are parallel to the longitudinal axis x of the truck 1 and located substantially at the longitudinal half-line of the truck itself. In a further embodiment, however, it would be possible to provide a truck in which the two arms oscillate about two unaligned oscillation axes, as long as they were distanced and preferably parallel one to another.

Each front wheel 2 and 3 can be an independent drive wheel, as in the illustrated embodiment, thanks to the use of a motor 6 or 7 which is operatively associated to the rotation axis j or k of the wheel itself and which is mounted on the independently-oscillating arm 4 or 5.

Each oscillating arm 4 or 5 comprises a fork-shaped external part bearing a front wheel 2 or 3, a central part having a substantially straight axis, normal to the axis of rotation j or k of the wheel, and an internal part, having an axis inclined upwards with respect to the axis of the central part. In other embodiments the truck arms could have an internal part having a non-inclined axis or an axis inclined downwards with respect to the axis of the central part. The internal parts of each arm are rotatably coupled to a frame 8 of the truck. In order to keep the arms 4 and 5 coplanar on a plane which is normal to the longitudinal axis x of the truck, the internal part of one arm has one fork-shaped end in which an end of the internal part of the other arm is inserted. Alternatively to the fork-shape, the internal part of an arm can be set side-by-side with the internal part of the other arm.

Each front wheel 2 or 3 is rotatable on a rotation support mounted internally of the fork on the external part of an arm 4 or 5. As far as truck steering is concerned, each wheel 2 or 3 can rotate on command with respect to the fork of the external part of the arm, about a rotation axis h or w which is normal to the rotation axis j or k of the front wheel.

The means for activating the arms 4 and 5 comprise, for each arm, a double-acting hydraulic cylinder 9 and 10. An upper end of each hydraulic cylinder 9 or 10 is hinged to the frame 8 of the truck about a first pivot 11 or 12 having an axis which is parallel to the longitudinal axis x of the truck itself. A lower end of each hydraulic cylinder 9 or 10 is hinged to the corresponding arm 4 or 5 about a pivot 13 or 14 having a parallel axis to the longitudinal axis x of the truck. The pivot 13 or 14 connecting either of the two arms 4 or 5 and the relative cylinder 9 or 10 is located lower than the rotation axis j or k of the front wheel borne by the particular arm 4 or 5.

The oscillation axis y of each arm 4 or 5 (in this case the oscillation axes of the arms substantially coincide) is located higher than the rotation axis j or k of the wheel 2 or 3 borne on the arm and also with respect to the axis of the pivot 13 or 14 connecting the lower end of the cylinder 9 or 10 and the arm itself. In a further embodiment, not illustrated, the oscillation axis of the arms can be located at a lower level with respect to the wheel rotation axis. In two further embodiments, also not illustrated, the oscillation axis of the arms can be located lower than the axis of the pivots 13 and 14, or can be lower than both the rotation axis of the wheels and the axis of the pivots 13 and 14.

The pivot 11 or 12 which connects any one of the cylinders 9 or 10 to the frame 8 is located further from the longitudinal half-line of the truck with respect to the oscillation axis y or the arm 4 or 5 actuated by the cylinder. The pivot 13 or 14 which connects any one of the cylinders 9 or 10 to the relative arm 4 or 5 is located further from the truck longitudinal half-line than the pivot 11 or 12 which connects the cylinder 9 or 10 to the frame 8, both at maximum and minimum cylinder extension and in any intermediate operative configuration.

The truck 1 is provided with a device for providing the arm 4 or 5 actuating means with a signal when the two arms are at least in a predetermined relative position. The signal can be used for blocking the arms in the above-mentioned position. The device comprises a reference organ 15 fixed to an arm and a sensor 16 fixed to the other arm. The reference organ 15 has a cylindrical surface which is coaxial to the oscillation axes y of the arms 4 and 5. A reference element (for example a notch) is predisposed on the cylindrical surface for contacting the sensor 16 (for example a microswitch) when the arms are in the above-mentioned predetermined relative position.

This position can be one in which the rotation axes j and k of the front wheels are coplanar. The wheels are blocked in position by means of the hydraulic cylinders 9 and 10.

The truck 1 is further provided with a device (not illustrated) for providing the cylinders 9 and 10 for actuating the arms 4 and 5 with a signal when at least one of the two cylinders is at least in a predetermined operative configuration. The signal can be used for blocking the cylinders in this configuration, which usually corresponds to a situation in which the work platform is parallel to a reference plane which is solidly connected to the truck 1.

The truck 1 is provided with means, of known type, for sensing the inclination of the work platform with respect to a horizontal reference plane. The truck 1 is also provided with known-type automatic means for controlling, which act on the means for actuating the oscillation of the arms 4 and 5 and bring the work platform into a level position, by means of controlled oscillations, in one direction or in another, of one or other or both of the arms 4 and 5. The automatic means for controlling are also predisposed to control, in coordination with the regulation of the front wheels, adjustment displacements in a vertical direction also of the back wheels. Compensation for the terrain, with the aim of levelling the work platform, can be made by means of a coordinated regulation of all four wheels, each of which can displace independently of the others for the purpose of adjustment in a vertical direction.

## Claims

1. A lift truck for work platforms, in which: the platform is raisable in such a way for it to be parallel to a reference plane; the truck is provided with two steering front wheels (2, 3) and two height-adjustable back wheels;
**characterised in that** each front wheel (2, 3) is borne on one of two commandable oscillating arms (4, 5) controlled by means for actuating which means for actuating are independent for each of the two arms (4, 5).

2. The truck of claim 1, **characterised in that** the two arms (4, 5) oscillate about oscillation axes (y) which are aligned one to the other.

3. The truck of claim 1 or 2, **characterised in that** it comprises a device for providing a signal to the means for actuating when the two arms (4,5) are at least in a predetermined relative position, the signal being usable for blocking the two arms (4,5) in the predetermined relative position.

4. The truck of claim 2 or 3, **characterised in that** the device comprises a reference organ (15) fixed to an arm and a sensor (16) fixed to another arm, the reference organ being provided with a cylindrical surface which is coaxial to the oscillation axes (y) and exhibiting a cylindrical surface which is coaxial to the oscillation axes (y) and which bears at least one reference element predisposed for contacting the sensor (6) when the arms (4, 5) are in the predetermined relative position.

5. The truck of any of the preceding claims, **characterised in that** the means for actuating comprise two cylinders (9, 10), one for each arm (4, 5); each of the two cylinders (9, 10) having an end which is hinged to an arm (4, 5) about a pivot of two pivots (13, 14), which two pivots (13, 14) have axes which are parallel to a longitudinal axis (x) of the truck and are located lower than a rotation axis (j, k) of a wheel borne by the arm (4, 5).

6. The truck of any one of the preceding claims, **characterised in that** each of the two arms (4, 5) oscillates about an oscillation axis (y) which is parallel to a longitudinal axis (x) of the truck (1) and which is located higher than the rotation axis (j, k) of the wheel borne by the arm (4, 5).

7. The truck of any one of the preceding claims, **characterised in that** the means for actuating comprise, for each arm (4, 5), a cylinder (9, 10) having an end hinged to the arm (4, 5) about a pivot (13, 14) with a parallel axis to the longitudinal axis (x) of the truck, and also **characterised in that** each arm (4, 5) oscillates about an oscillation axis (y) which is parallel to the longitudinal axis (x) and located higher than the axis of the pivot (13, 14).

8. The truck of any one of the preceding claims, **characterised in that** each arm of the oscillating arms (4, 5) comprises a fork-shaped external part which rotatably bears a wheel of the front wheels (2,3), a central part having a straight axis which is perpendicular to the axis (h, w) of the fork, and an internal part having an axis which is inclined upwards with respect to the axis of the central part.
